# EUROPEAN PATENT APPLICATION

(11) **EP 2 677 480 A1**
(43) Date of publication of application: **25.12.2013**
(21) Application number: 13171395.0
(22) Date of filing: 11.06.2013
(51) Int. Cl.: G06Q 10/06, G06Q 10/10, G06Q 50/04

(54) **System and Method for Addressing Assembly Issues During Design and Assembly Planning of Complex Systems**

(30) Priority: 19.06.2012 US 201213527560
(71) Applicant: The Boeing Company, Chicago, IL 60606-2016 (US)
(72) Inventor: Salour, Ali, Fenton, MO Missouri 63026 (US); Navinchandran, Madhusudanan, 560 012 Bangalore (IN); Chakrabarti, Amaresh, 560 012 Bangalore (IN)
(74) Representative: Boult Wade Tennant

(57) **Abstract**

A method comprises using a computer system to acquire information for design and assembly planning of commercial aircraft. The computer system uses an assembly situation model to identify causes of issues with an assembly situation. The assembly situation model includes an initial state, a final state, and an assembly process for transitioning from the initial state to the final state. The computer system stores each cause in computer memory as a relational form of parameters.

## Description

### BACKGROUND

Commercial aircraft are custom-made products having specialized features and options specific to airline customers. Typically, an airline carrier or other customer specifies requirements for a new aircraft, and a limited number of those aircraft are designed to those requirements.

Aircraft production is unlike automobile production. Automobiles are mass produced on assembly lines. Manufacturing and assembly are largely automated. Aircraft production, in contrast, involves a combination of automated and manual processes by craftsmen under tight control by work instructions derived from engineering CAD information and process specifications. Quality and precision are much higher, and many more parts and assemblies are integrated and tested before the final product is made.

Many skill levels are involved in the design, manufacture and assembly of a large commercial aircraft. Thousands of engineers and technicians are involved. Aircraft design involves structural and system engineers, who develop general models, and engineers who perform design review on those models. Aircraft manufacture and assembly involve manufacturing industrial and equipment engineers, who assess the models for manufacturability and draw up plans for fabricating and assembling parts. The manufacture and assembly also involves machinists, shop mechanics and other skilled technicians who fabricate and assemble the parts.

Consider an example in which a prototype part is designed and then fabricated, but doesn't fit in an aircraft assembly. The part is sent back to engineering for redesign. The redesigned part is then fabricated and tested again for fit-up.

This type of trial and error is time consuming, and additional engineering effort is expended to test various configurations. This type of problem is very common to system installations such as tubing and cables, where tube joints bending points, number of connectors, routing path, and accessibility are not easily determined in the CAD information.

This type of problem may be overcome by having manufacturability experts sit side by side with engineers during design and assembly planning. While this approach might be feasible for a simple system, it is not feasible for the design and assembly planning of a complex system such as a commercial aircraft.

### SUMMARY

According to an aspect of the present disclosure there is provided a method that comprises using a computer system to acquire information for designing and planning assembly of commercial aircraft. The computer system uses an assembly situation model to identify causes of issues with an assembly situation. The assembly situation model includes an initial state, a final state, and an assembly process for transitioning from the initial state to the final state. The computer system also stores each cause in computer memory as a relational form of parameters.

Advantageously, knowledge is obtained by presenting the assembly situation model to experts. Advantageously, the assembly process lists a sequence of steps forming the final state from the initial state. Preferably, identifying the causes of the issues includes identifying potential issues in the assembly situation, identifying causes of the issues; and identifying steps in the assembly process that gives rise to the causes. Advantageously, the relational form and parameters are added to a data structure associated with an assembly situation. Preferably, the method further comprises adding a solution and issue to each data structure. Preferably, the data structure includes multiple issues, solutions, and constraints. Preferably, a solution includes a suggestion to consult an expert. Preferably, the parameters are independent parameters. Advantageously, the computer memory is searchable. Preferably, the method further comprises accessing the knowledge to diagnose issues in assemblies under design and planning. Preferably, the method further comprises using the accessed knowledge to modify the assemblies under design and planning.

According to a further aspect of the present disclosure there is provided a knowledge system that includes a server system programmed to present assembly situation models to identify causes of issues with assembly situations, and adding the causes to data structures, each assembly situation model including an initial state, a final state, and an assembly process for transitioning from the initial state to the final state, and a database for storing the data structures.

Advantageously the server system is programmed to upload a knowledge acquisition interface to at least one client to present an assembly situation model and prompt an expert for causes of issues with an assembly situation. Advantageously, the assembly process lists a sequence of steps forming the final state from the initial state. Advantageously, the server system is further programmed to provide a knowledge access interface to clients so the clients can search the database. Advantageously, at least one of the data structures includes multiple issues, solutions, and constraints.

According to a still further aspect of the present disclosure there is provided a method of designing a commercial aircraft that includes using computer systems to generate CAD information for parts of the aircraft and assemblies including the parts, and consulting a computer-based knowledge system to flag any assembly issues that are not contained in the CAD information.

Advantageously, the method further comprises redesigning at least some of the parts to address the flagged assembly issues; whereby the assembly issues are resolved during the part design and assembly planning. Advantageously, the method further comprises adding knowledge to the knowledge system from lessons learned during assembly.

These features and functions may be achieved independently in various embodiments or may be combined in other embodiments. Further details of the embodiments can be seen with reference to the following description and drawings.

### BRIEF DESCRIPTION OF THE DRAWINGS

Figure 1 is an illustration of a commercial aircraft production process.
Figure 2A is an illustration of a system for assisting with design and assembly planning of a complex system such as a commercial aircraft.
Figure 2B is an illustration of a method for design and assembly planning of a complex system such as a commercial aircraft.
Figure 3 is an illustration of an Assembly Situation Model.
Figure 4 is an illustration of a method of acquiring knowledge for a computer-based knowledge system.
Figure 5 is an illustration of a method of expressing a problem-cause in a relational form.
Figure 6 is an illustration of an assembly situation data structure.
Figure 7 is an illustration of another Assembly Situation Model.
Figure 8 is an illustration of a computer-based knowledge system.

### DETAILED DESCRIPTION

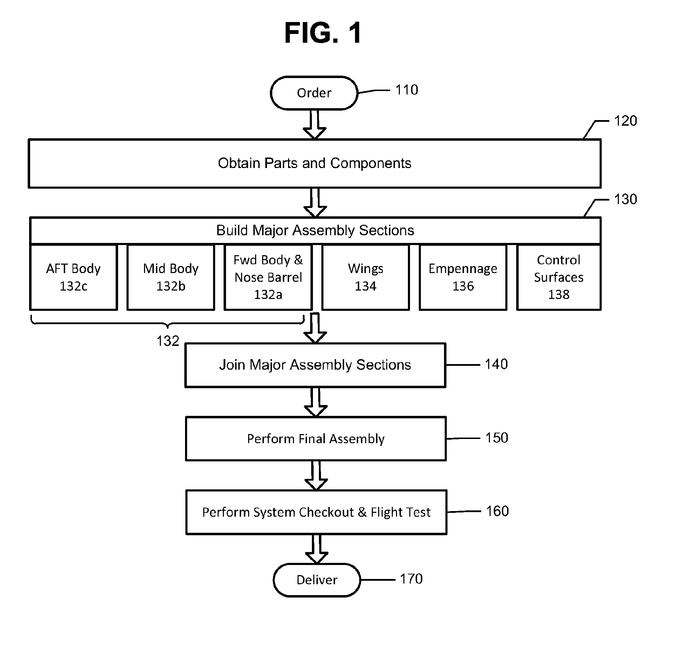

Reference is made to Figure 1, which illustrates an example of a commercial aircraft production process. At block 110, a commercial aircraft is ordered by a customer. For instance, the customer may be an airline carrier.

At block 120, parts and components are obtained. Some parts and components for the aircraft are purchased, while other parts and components are designed and fabricated.

At block 130, these parts and components are used to build major aircraft assembly sections: fuselage 132, wings 134, empennage 136, and control surfaces 138. In some aircraft, the fuselage may include a forward body and nose barrel 132a, mid body 132b, and aft body 132c.

At block 140, these major aircraft assembly sections 132-138 are joined. Systems are tested, and surface finishes are applied.

At block 150, final assembly is performed. As part of the final assembly, landing gear, engines, interior, and customer-furnished parts are installed.

At block 160, system checkout and flight tests are performed. At block 170, the commercial aircraft is delivered to the customer.

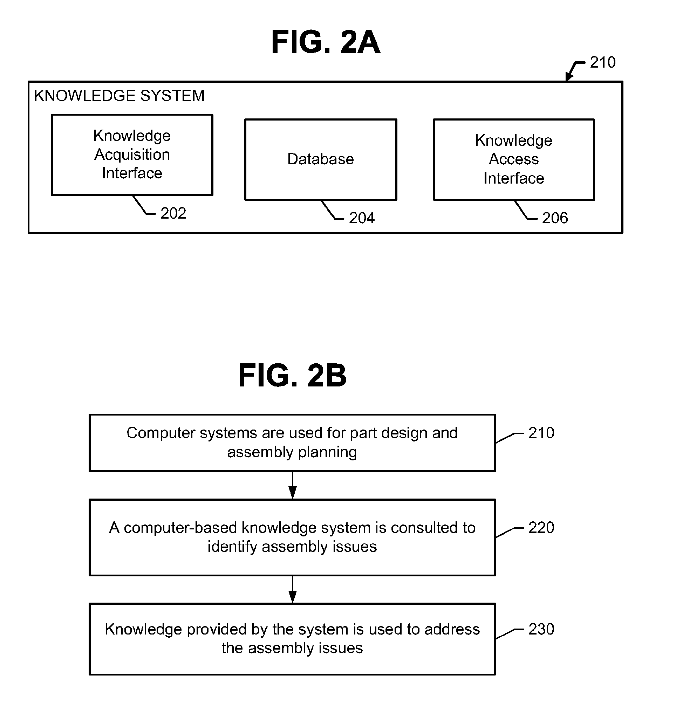

Reference is made to Figure 2A, which illustrates a computer-based knowledge system 200 for assisting with design and assembly planning of a complex system such as a commercial aircraft. The knowledge system 200 includes a knowledge acquisition interface 202 for acquiring knowledge about issues, causes and solutions regarding assembly of the complex system.

The knowledge system 200 further includes a database 204 for storing the knowledge acquired by the knowledge acquisition interface 202, and a knowledge access interface 206 for accessing the knowledge during design and assembly planning of the complex system. The knowledge may be used to address assembly issues during design and assembly planning.

Reference is made to Figure 2B, which illustrates a method for design and assembly planning of a complex system such as a commercial aircraft. At block 210, computer systems are used for part design and assembly planning of the complex system. For instance, commercial aircraft design involves structural and system engineers, who develop computer models, and engineers who perform design review on those models. The assembly planning considers various possibilities in terms of sequence of assembly, conflicts amongst various departments, and maintenance requirements. Thousands of engineers may be involved during part design and assembly planning.

At block 220, the knowledge access interface 206 is used to identify any assembly issues. A designer or assembly planner presents an assembly situation to the knowledge access interface 206, which identifies any assembly issues.

At block 230, the knowledge may be used to address any assembly issues in the assembly situation. For instance, parts and assemblies are redesigned to address the assembly issues.

As but one example of an assembly situation, an assembly is designed with a tube that is routed through a wall. In order to route the tube, the tube is designed with a certain bend radius. Unbeknownst to the designer, that bend radius violates a certain constraint. However, the knowledge access interface 206 identifies that constraint, and indicates that the tube violates the constraint. In response, the designer re-routes the tube so it has a different bend radius. Thus, rather than re-routing the tube during assembly, the tube is re-routed during design.

As another example, a hard-to-reach access area is provided for joining two tube sections. A design engineer may not be aware of limitations for utilizing an external tool to join the two tube sections (a manufacturing equipment engineer is more likely to be aware of these limitations). The knowledge access interface 206 identifies that issue and advises the design engineer to consult a manufacturing equipment engineer.

In a similar example, the knowledge access interface 206 considers accessibility for a tool tip of an automated robotic system that drills mold line holes of an aerospace structure. The knowledge access interface 206 advises a design engineer to request an equipment engineer and a simulation modeling expert to carefully evaluate spindle size and foot print as it approaches the part surface. Time and cost are saved by making adjustments during design.

As yet another example, wire bundles are routed through structure access holes. The knowledge access interface 206 identifies constraints with respect to the thickness of the insulation around the cabling and the difficulty of assessing the combined thickness. In addition, the knowledge access interface 206 provides advice about the location of the connectors and the possibility of contacts and frictions between the wire strands and sharp objects such as fasteners. The knowledge access interface 206 also recommends having this assembly situation carefully evaluated by a manufacturing expert.

Yet another example involves ergonomics. A part built to a CAD model might cause human fatigue and job injury. The knowledge access interface 206 can identify ergonomics as an issue and suggest review by a manufacturing expert for modification during design of the part.

A system and method herein provides a feasible approach for considering assembly issues during the design and assembly planning phases of a large, complex system involving thousands of engineers. The knowledge system enables assembly and design errors to be caught and corrected during design and assembly planning instead of actual assembly. Consequently, a system and method herein reduces trial and error in designing parts and assemblies, especially for parts and assemblies that are not easily determined from CAD information. Because engineering effort on testing various configurations is reduced or eliminated, time and cost of designing and manufacturing complex systems such as commercial aircraft is also reduced.

As indicated in some of the examples above, not all information and knowledge related to an assembly (as both product and process) might be present in CAD information. The knowledge system 200 adds knowledge that isn't present in the CAD information.

Knowledge for the system 200 may be acquired in different ways at different times. As a first example, knowledge may be acquired by consulting "experts". An expert, as used herein, refers to someone with enough practical experience and understanding in their domain of assembly, and is trusted to have the qualifications to address the situation. Ideally, the experts have considerable experience in their domain of assembly.

As a second example, knowledge may be obtained from "lessons learned" during assembly. If, during assembly, an issue is identified and a solution is successfully implemented, the issue and solution are added to the database 204. In this manner, knowledge accumulates and increases over time.

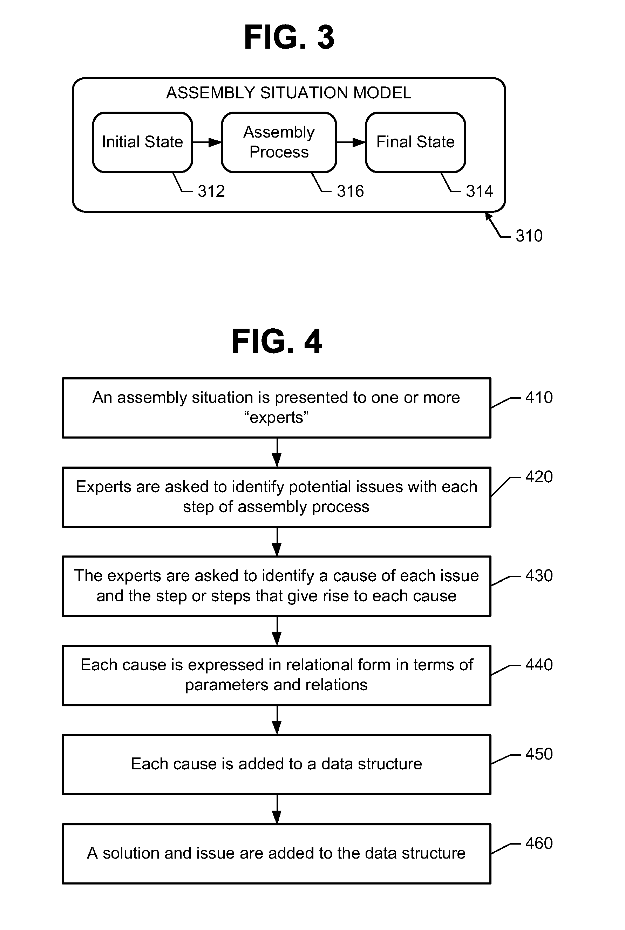

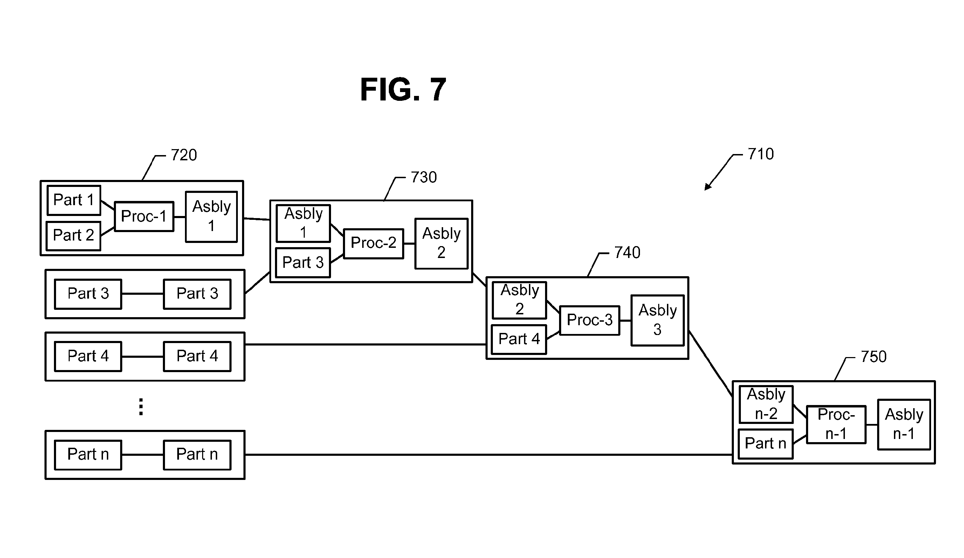

Reference is now made to Figure 3. In some embodiments, knowledge for the computer-based knowledge system may be acquired and stored by presenting each assembly situation as an Assembly Situation Model (ASM) 310. In general, assembly is a process of joining two or more parts together to form an integral structure. The assembly process may involve a combination of different parameters related to the product and process rather than just a single parameter. The ASM 310 describes an assembly situation as a transition from an initial state 312 to a final state 314. In some instances, the initial state 312 is a collection of individual parts, and the final state 314 is a subassembly or final assembly of the parts. An assembly process 316 refers to the steps for transitioning from the initial state 312 to the final state 314. When extended to a larger assembly process, the final state 314 of one ASM 310 may be used as the initial state 312 of the next ASM 310 (see, e.g., FIG. 7). Thus, in other instances, the initial state 312 includes multiple subassemblies.

The ASM 310 makes it easier to acquire and store knowledge to the knowledge system 200. Acquiring knowledge in the context of an ASM 310 is easier than directly querying about possible issues in the assembly domain. It assists an expert to locate an issue and a cause of the issue with respect to a particular step of assembly.

Reference is now made to Figure 4, which illustrates a method of acquiring knowledge about an assembly situation for the computer-based knowledge system. At block 410, an ASM is presented to one or more experts. Since the assembly situation is presented as an ASM, the assembly situation is initially presented as a set of parts in the unassembled (initial) state. During the transition from the initial state to final state, these parts will be progressively assembled in a specified sequence of steps as described in the assembly process.

At block 420, the experts are asked to identify potential issues with each step of the assembly process. At block 430, the experts are asked to identify a cause of each issue and the step or steps that give rise to each cause. For example, the experts might be aware of a potential issue with a fastener grip that rubs against a cable underneath a specific type of structure. The rubbing could eventually wear out the cable's insulation and cause chafing of wire. The cause of this issue might be a fastener grip that is too long.

At block 440, a cause of an issue may be expressed as a violation of a constraint. The constraint, in turn, may be expressed in relational form in terms of parameters and relations. Parameters may be expressed as a quantitative value (distance, hole diameter, fastener length, fastener spacing, number of parts, weight of parts, number joints, etc.). Consider the issue of a cable bundle through a plate. Parameter X is represented as a bend radius, and parameter Y is the minimum bend radius. In this relational form, the constraint is expressed as X>Y. A problem arises if the constraint is violated.

At block 450, each constraint is added to a data structure, which is saved in computer memory. The data structure has a name, which may describe an assembly situation. The data structure has fields for at least one parameter. For example, the data structure named "Cable Bundle" has "minimum radius of cable" and "bend radius" as parameters. The data structure also stores the relational form X>Y as a constraint.

At block 460, one or more solutions and issues may be added to the data structure. A solution may be characterized as a suggestion. For example, a suggestion for the fastener grip problem might be to look for fastener grip for specific types of structures.

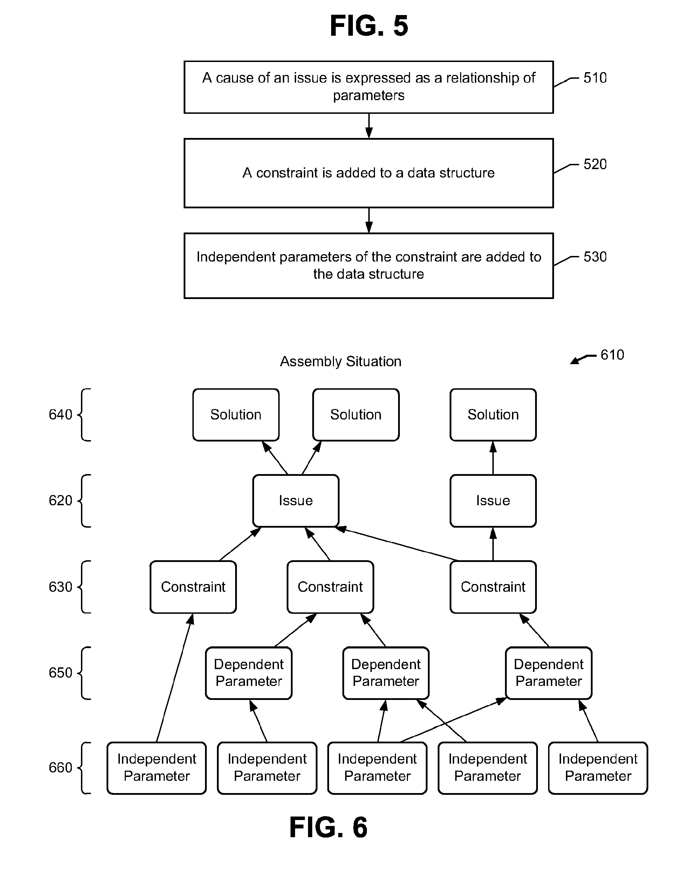

Reference is now made to Figure 5, which illustrates a general method of expressing the cause of an issue in a relational form. At block 510, the cause is expressed as constraint A rel B, where A and B are parameters and rel is a relationship. At block 520, the constraint is added to the data structure.

At block 530, the independent parameters of the constraint, and the expressions for dependant parameters are added to the data structure. For instance, parameter A may have a value that is independent of other parameters in the assembly situation. However the value of parameter B may be dependent on other parameters C and D, where B = C + D. In its final form, the constraint is expressed only in terms of independent parameters.

Reference is made to Figure 6. A data structure herein is not limited to a single constraint for an assembly situation. As illustrated in Figure 6, a data structure 610 may have multiple issues 620, multiple constraints 630, and multiple solutions for an assembly situation. The constraints 630 may be expressed as relationships of dependent parameters 650, which are functions of independent parameters 660.

Reference is made to Figure 7. An ASM herein is not limited to a single initial state, assembly process, and final state. An ASM herein may have multiple assembly processes, initial states and final states. Consider the ASM 710 illustrated in Figure 7, which is a combination of assemblies and parts. The ASM 710 includes a total of n parts. The final state of a first ASM 720 is an assembly of first and second parts. The final state of a second ASM 730 is an assembly of the final state of the first ASM 720 and a third part. The final state of a third ASM 740 is an assembly of the final state of the second ASM 730 and a fourth part. The final state of a final ASM 750 is an assembly of the final state of the third ASM 740 and an n^{th} part.

Each ASM 710 may be constructed from product and process information such as specifications, installation manuals, etc. This information may be written by material and process engineers. The individual parts and subassemblies at every assembly step may be sourced from the assembly product information such as CAD information.

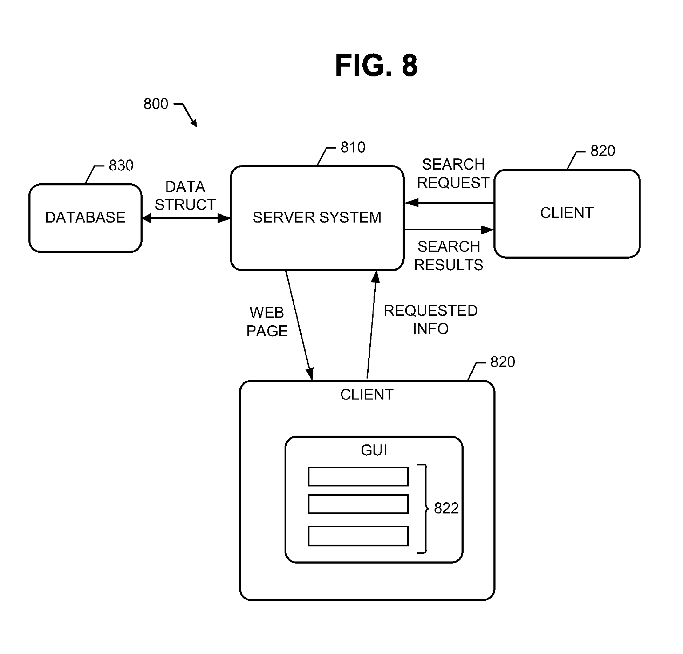

Reference is now made to Figure 8, which illustrates an example of a computer-based knowledge system 800. The knowledge system 800 includes a server system 810 that enables one or more clients 820 to add knowledge (e.g., in the form of data structures) to a database 830 and enables one or more clients 820 to search the database 830 for knowledge about assembly situations.

A client 820 may communicate with the server system 810 via a graphical user interface. In some embodiments, the server system 80 may provide the interface in the form of a web page. Consider a web page for adding knowledge. When downloaded to a client 820, such a web page may provide form fields 822, which presents an ASM to an expert, and asks the expert to identify potential issues with each step of the assembly process, identify a cause of each issue, express each cause in terms of parameters and relations, and provide a solution. The form fields 822 may force the expert to use standard terminology of parts and processes. The entered information is uploaded to the server system 810, which forms data structures from that information, and stores the data structures in the database 830.

Now consider an interface for searching for knowledge. The interface may have search capability to list situations, parameters, and a list of potential issues. In some embodiments, the server system 810 may provide the interface in the form of a web page. When downloaded to a client 830, the web page may enable a client 820 to search the database 830 for data structures related to a particular assembly situation. The client 820 may also download and display the results of a search to the design engineer. The search results enable that design engineer to consider assembly issues concurrently with the design. A method and system herein are not limited to commercial aircraft. A method and system herein may be applied to, submarines, missiles, space systems, and other system that are highly complex, and involve large numbers of skilled people during design and assembly planning.

## Claims

1. A method comprises using a computer system (800) to acquire knowledge for design and assembly planning of commercial aircraft, including using an assembly situation model (310) to identify causes of issues with an assembly situation, the assembly situation model including an initial state (312), a final state (314), and an assembly process (316) for transitioning from the initial state (312) to the final state (314); and
storing each cause in computer memory as a relational form of parameters.

2. The method of claim 1, wherein knowledge is obtained by presenting the assembly situation model (310) to experts.

3. The method of claim 1, wherein the assembly process lists a sequence of steps forming the final state (314) from the initial state (312).

4. The method of claim 3, wherein identifying the causes of the issues includes identifying potential issues in the assembly situation, identifying causes of the issues; and identifying steps in the assembly process that gives rise to the causes.

5. The method of claim 1, wherein the relational form and parameters are added to a data structure (610) associated with an assembly situation.

6. The method of claim 5, further comprising adding a solution and issue to each data structure (610).

7. The method of claim 6, wherein the data structure (610) includes multiple issues (620), solutions, and constraints (630).

8. The method of claim 6, wherein a solution includes a suggestion to consult an expert.

9. The method of claim 5, wherein the parameters are independent parameters (660).

10. The method of claim 1, wherein the computer memory is searchable.

11. The method of claim 10, further comprising accessing the knowledge to diagnose issues in assemblies under design and planning.

12. The method of claim 10, further comprising using the accessed knowledge to modify the assemblies under design and planning.

13. A method of designing a commercial aircraft, comprising:
using computer systems to generate CAD information for parts of the aircraft and assemblies including the parts; and
consulting a computer-based knowledge system (800) to flag any assembly issues that are not contained in the CAD information.

14. The method of claim 13, further comprising redesigning at least some of the parts to address the flagged assembly issues; whereby the assembly issues are resolved during the part design and assembly planning.

15. The method of claim 13, further comprising adding knowledge to the knowledge system from lessons learned during assembly.
